# EUROPÄISCHE PATENTANMELDUNG

(11) **EP 0 696 122 A2**
(43) Veröffentlichungstag der Anmeldung: **07.02.1996**
(21) Anmeldenummer: 95111846.2
(22) Anmeldetag: 27.07.1995
(51) Int. Cl.: H04M 1/74, H02H 3/16

(54) **Fehlerstromschutzeinrichtung für ein Beistellgerät in digitalen Telefonanlagen**

(30) Priorität: 01.08.1994 DE 4427207
(71) Anmelder: SIEMENS AKTIENGESELLSCHAFT, D-80333 München (DE)
(72) Erfinder: Urbigkeit, Frank, Dipl.-Ing. (FH), D-81739 München (DE)

(57) **Zusammenfassung**

Die Erfindung betrifft eine Fehlerstromschutzeinrichtung (FE) für ein Beistellgerät (BG), welches zur Anschaltung an ein Telekommunikationsendgerät, insbesondere an einen Telefonapparat (TA), in digitalen Telefonanlagen ausgebildet ist, wobei Signalleitungen (SL1...SL4) zur Verbindung von Schaltkreisen (ES1, ES2) in beiden Geräten vorgesehen sind, und die Signalleitungen (SL1...SL4) im Beistellgerät (BG) über Schutzdioden (SD1, SD2) zumindest an einer ein Bezugspotential (OV) führenden Masseleitung (ML) angeschaltet sind. Erfindungsgemäß ist über die Fehlerstromschutzeinrichtung (FE) dem Beistellgerät (BG) vom Telekommunikationsendgerät eine Gleichspannung (US) zugeführt, wobei im Fehlerfall bei Auftreten eines unzulässigen Gleichspannungspotentials auf der Masseleitung (ML) in Bezug zu den Signalleitungen (SL1...SL4) die Gleichspannung (US) von der Fehlerstromschutzeinrichtung (FE) abgeschaltet wird.

## Beschreibung

Die Erfindung betrifft eine Fehlerstromschutzeinrichtung für ein Beistellgerät für Telekommunikationsendgeräte.

In digitalen Telefonanlagen, finden Namenstaster, elektronische Notizbücher und ähnliche Einrichtungen Verwendung. Diese Beistellgeräte sind über eine Schnittstelle mit einem Grundgerät, d.h. mit einem Telekommunikationsendgerät, verbunden. Solche Telekommunikationsendgeräte sind beispielsweise Telefonapparate, Faxgeräte und ähnliches.

Solche Beistellgeräte besitzen im allgemeinen einen eigenen Gleichspannungsregler, der vom Telekommunikationsendgerät mit einer ungeregelten Gleichspannung gespeist wird. Über ein steckbares Anschlußkabel werden die benötigte Versorgungsspannung und ein Bezugspotential dem Beistellgerät zugeführt. Das Anschlußkabel enthält daneben Signalleitungen zur Verbindung von elektronischen Schaltkreisen im Beistellgerät und im Grundgerät.

Bei diesen Steckverbindungen besteht durch ein unterschiedliches Steckverhalten die Gefahr einer ungleichmäßigen Kontaktierung. Beim Anstecken des Beistellgerätes an das Grundgerät unter Spannung können die an den elektronischen Schaltkreisen vorgesehenen Schutzdioden, sogenannte Clampingdioden, im Telekommunikationsendgerät und im Beistellgerät zerstört werden. Dieser Fall tritt dann ein, wenn das Bezugspotential beim Anstecken später kontaktiert als die Signalleitungen, bzw. wenn das Bezugspotential überhaupt nicht kontakatiert. In diesem Fall bildet sich ein Pseudorückleitung über die Signalleitungen aus. Der nun fließende Fehlerstrom führt zum Durchlegieren der Schutzdioden, die nur für eine sehr geringe Strombelastung ausgelegt sind. Nach der Zerstörung der Schutzdioden können auch die elektronischen Schaltkreise wie Mikroprozessoren, integrierte Schaltkreise und anderes beschädigt werden.

Der Erfindung liegt die Aufgabe zugrunde, eine Fehlerstromschutzeinrichtung für ein Beistellgerät anzugeben, durch das die elektronischen Komponenten auch bei einer fehlenden oder kurzzeitig fehlenden Masseverbindung der Bezugspotentiale im Telekommunikationsendgerät und im Beistellgerät nicht zerstört werden.

Diese Aufgabe wird erfindungsgemäß durch die im Patentanspruch 1 angegebenen Merkmale gelöst.

Bei dem erfindungsgemäßen Beistellgerät wird eine unzulässige Gleichspannung auf der Masseleitung in bezug zu den Signalleitungen erkannt und die Gleichspannungsversorgung abgeschaltet.

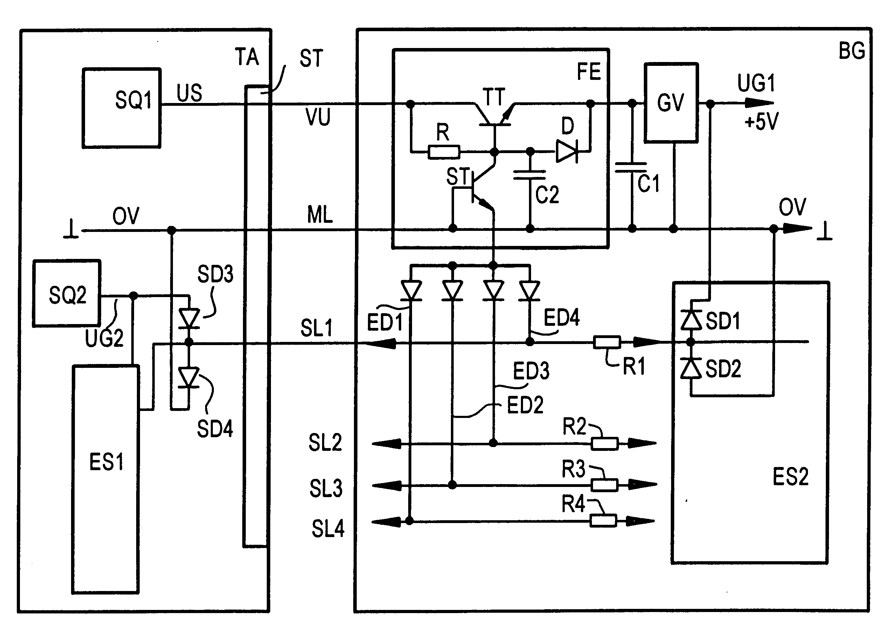

Im folgenden wird die Erfindung anhand eines in der Zeichnung dargestellten Ausführungsbeispieles beschrieben.

In der einzigen Figur sind als Blockschaltbild die für das Verständnis der Erfindung notwendigen Komponenten eines Beistellgeräte BG und eines Telefonapparates TA dargestellt.

Der Telefonapparat TA weist eine Gleichspannungsquelle SQ1 auf, die eine Gleichspannung US über eine Versorgungsleitung VU an das Beistellgerät BG gibt. Die Versorgungsleitung VU ist mit dem Kollektor eines Schalttransistors TT verbunden, dessen Emitter eingangsseitig mit einem Gleichspannungswandler GW und über einen Kondensator C1 mit einem Bezugspotential OV verbunden ist. Der Kollektor des Schalttransistors TT ist über einen Widerstand R mit seiner Basis verbunden.

Der Gleichspannungswandler GW gibt ausgangsseitig eine Gleichspannung UG1 von beispielsweise 5 V ab. Der Gleichspannungswandler GW ist mit dem Bezugspotential OV verbunden. Die Bezugspotentiale OV des Telefonapparates TA und des Beistellgerätes BG sind über eine Masseleitung ML miteinander verbunden.

Der Telefonapparat TA und das Beistellgerät BG weisen elektronische Schaltungen ES1 bzw. ES2 auf, die über Signalleitungen SL1...SL4 miteinander verbunden sind. Im folgenden wird die Beschaltung der Signalleitung SL1 näher beschrieben, wobei die anderen Signalleitungen SL2...SL4 gleichartig beschaltet sind. Die Anzahl der Signalleitungen SL1 bis SL4 kann auch andere Werte annehmen.

Die Signalleitung SL1 ist im Telefonapparat TA über eine Schutzdiode SD3 mit der Ausgangsseite einer Gleichspannungsquelle SQ2 und mit einer Schutzdiode SD4 mit dem Bezugspotential OV verbunden. Die Gleichspannungsquelle SQ2 gibt eine Gleichspannung UG2 ab. Im Beistellgerät BG ist die Signalleitung SL1 über eine Schutzdiode SD1 mit der Ausgangsseite des Gleichspannungswandlers GW und über eine Schutzdiode SD2 mit dem Bezugspotential OV verbunden.

Die Versorgungsleitung VU, die Masseleitung ML und die Signalleitungen SL1...SL4 sind am Telefonapparat TA mit einem Stecker ST kontaktiert.

Erfindungsgemäß ist der Schalttransistor TT Bestandteil einer Fehlerstromschutzeinrichtung FE. Diese enthält neben dem schon beschriebenen Widerstand R am Schalttransistor TT einen Steuertransistor ST, dessen Kollektor mit der Basis des Schalttransistors TT, dessen Basis mit dem Bezugspotential OV, und dessen Emitter mit zumindest einer der Signalleitungen SL1...SL4 verbunden ist. Bei dem dargestellten Ausführungsbeispiel ist der Emitter des Steuertransistors ST über Entkopplungsdioden ED1...ED4 mit allen vier Signalleitungen SL1...SL4 verbunden.

Wird nun das Beistellgerät BG über den Stecker ST mit dem Telefonapparat TA unter Spannung kontaktiert, so wird bei fehlender oder kurzzeitig fehlender Verbindung der Bezugspotentiale OV der beiden Geräte der Steuertransistor ST über seinen Basisanschluß leitend geschaltet. Hierdurch wird der Schalttransistor TT abgeschaltet, so daß ein weiteres Aufladen des Kondensators C1 verhindert wird. Die Schaltung regelt sich so ein, daß der Rückstrom, der über die Schutzdioden SD1 und SD2, bzw. über die Schutzdioden an den anderen Signalleitungen SL2...SL4 fließt, den Steuertransistor ST in ein Zweipunktreglerverhalten bringt.

Bei fehlender Masseverbindung der Bezugspotentiale OV im Telefonapparat TA und im Beistellgerät BG wird erfindungsgemäß die Gleichspannung US für das Beistellgerät BG abgeschaltet.

Über Widerstände R1...R4 in den Signalleitungen SL1...SL4, die jeweils zwischen den Entkopplungsdioden ED1...ED4 und der elektronischen Schaltung ES2 im Beistellgerät BG angeordnet sind, kann ein zulässiger Rückstrom über die Schutzdioden (SD2) auf den Signalleitungen SL1...SL4 eingestellt werden.

Die Basis des Schalttransistors TT bzw. der Kollektor des Steuertransistors ST können über einen Kondensator C2 mit dem Bezugspotential OV verbunden sein. Hierdurch wird eine weiche Stromeinschaltung mit den zeitbestimmenden Elementen Widerstand R und Kondensator C2 bewirkt, sowie eine Ladungsbegrenzung für den Kondensator C1 im Fehlerfall.

Die Basis des Schalttransistors TT bzw. der Kollektor des Steuertransistors ST können weiter über eine in Flußrichtung gepolte Diode D mit dem Emitter des Schalttransistors TT verbunden sein. In diesem Fall wird der Steuertransistor ST wenig belastet, da die Kondensatorladung vom Kondensator C1 gegen die Flußrichtung der Diode D wirkt. Diese Variante ist besonders für leistungsschwache Steuertransistoren ST geeignet. Hierdurch wird weiter eine Stoßbelastung für den Telefonapparat TA verhindert, so daß ein synchronisierter Telefonapparat TA beim Anstecken des Beistellgerätes BG unbeeinträchtigt bleibt.

Bei der Schaltungsvariante ohne diese Diode D wird ein leistungsstarker Steuertransistor ST benötigt, der den Kondensator C1 schnell entlädt. Diese Schaltungsvariante ist vorzugsweise in den Fällen anzuwenden, in denen die Stromeinwirkdauer bei hochsensiblen elektronischen Schaltungen ES2 im Fehlerfall extrem kurz sein muß.

## Patentansprüche

1. Fehlerstromschutzeinrichtung (FE) für ein Beistellgerät (BG), welches zur Anschaltung an ein Telekommunikationsendgerät, insbesondere an einen Telefonapparat (TA), in digitalen Telefonanlagen ausgebildet ist,
wobei Signalleitungen (SL1...SL4) zur Verbindung von Schaltkreisen (ES1, ES2) in beiden Geräten vorgesehen sind, und die Signalleitungen (SL1...SL4) im Beistellgerät (BG) über Schutzdioden (SD1, SD2) zumindest an einer ein Bezugspotential (OV) führenden Masseleitung (ML) angeschaltet sind,
**dadurch gkennzeichnet,**
daß über die Fehlerstromschutzeinrichtung (FE) dem Beistellgerät (BG) vom Telekommunikationsendgerät eine Gleichspannung (US) zugeführt ist, wobei im Fehlerfall bei Auftreten eines unzulässigen Gleichspannungspotentials auf der Masseleitung (ML) in Bezug zu den Signalleitungen (SL1...SL4) die Gleichspannung (US) von der Fehlerstromschutzeinrichtung (FE) abgeschaltet wird.

2. Fehlerstromschutzeinrichtung (FE) nach Anspruch 1,
**dadurch gkennzeichnet,**
daß ein durch die zugeführte Gleichspannung (US) aufgeladener Kondensator (C1) im Fehlerfall von der Fehlerstromschutzeinrichtung (FE) entladen wird.

3. Fehlerstromschutzeinrichtung (FE) nach Anspruch 1 oder 2,
**dadurch gkennzeichnet,**
daß Widerstände (R1...R4) in den Signalleitungen (SL1...SL4) zur Begrenzung des Fehlerstromes vorgesehen sind.
